# EUROPEAN PATENT APPLICATION

(11) **EP 4 682 063 A1**
(43) Date of publication of application: **21.01.2026**
(21) Application number: 24774771.0
(22) Date of filing: 12.03.2024
(51) Int. Cl.: B64G 1/22, B64G 1/64, D02G 3/16, D06M 15/643

(54) **RIBBON, TETHER MATERIAL, TETHER, METHOD FOR MANUFACTURING RIBBON, METHOD FOR MANUFACTURING TETHER MATERIAL, AND METHOD FOR MANUFACTURING TETHER**

(30) Priority: 17.03.2023 JP 2023043529
(71) Applicant: Carbon Fly, Inc., Tokyo 135-0064 (JP)
(72) Inventor: DENG, Fei, Tokyo 135-0064 (JP); ISHIZEKI, Keisuke, Tokyo 135-0064 (JP); OHSAWA, MORI Ayano, Tokyo 135-0064 (JP)
(74) Representative: advotec.
(86) International application number: PCT/JP2024/009587
(87) International publication number: WO 2024/195632

(57) **Abstract**

Disclosed is a ribbon including a plurality of carbon nanotube fibers and extending in a first direction, wherein the plurality of carbon nanotube fibers extend in the first direction.

## Description

### TECHNICAL FIELD

The present invention relates to a ribbon, a tether material, a tether, a method for manufacturing a ribbon, a method for manufacturing a tether material, and a method for manufacturing a tether.

Priority is claimed on Japanese Patent Application No. 2023-043529, filed March 17, 2023, the content of which is incorporated herein by reference.

### BACKGROUND ART

There is space debris in Earth orbit, including parts of used artificial satellites and rockets. In order to collect space debris, a method using a slave unit connected to an artificial satellite that is a master unit can be considered.

The member connecting the master unit and the slave unit to each other is referred to as a tether. The tether has an expandable mesh-like structure from the viewpoint of being lightweight and mechanical strength. As the tether, a non-conductive tether or the like is known (for example, see Non Patent Document 1). The tether is formed by weaving fibrous materials referred to as tether materials together. The tether material is formed by twisting a plurality of twisted yarns together. It is considered that when a plurality of twisted yarns are used as a material for the tether material, it is possible to make the tether material both highly strong and thin. In addition, a tether used to remove space debris present in the vast expanse of space is required to have a deployment length on the order of kilometers.

### Citation List

### Non Patent Document

Non Patent Document 1: Hirohisa Kojima, Pavel M. TRIVAILO, "Control of Space Tether Systems," Measurement and Control, Vol. 57, No. 4, April 2018

### SUMMARY OF INVENTION

### Technical Problem

A non-conductive tether disclosed in Non Patent Document 1 is expected to have a large deployment length, such as several kilometers. However, the tether is made of a non-conductive material not to enable the exchange of electrical signals, and thus flexibility in operation for the tether is low. In addition, Non Patent Document 1 suggests a conductive tether, but in this case, only a tether with a deployment length of less than 1 kilometer has been realized, and a long conductive tether, such as that on the order of kilometers, has not been formed.

The conductive tether allows a sufficiently large current to flow between a master unit and a slave unit and enables the exchange of electrical signals. In addition, the conductive tether can be used to adjust an altitude of an artificial satellite with a Lorentz force generated by an interaction between a current flowing from an external power source and an Earth magnetic field, or an induced electromotive force generated by an interaction between a rotating artificial satellite and the Earth magnetic field.

On the other hand, as described above, a material and a design which are optimal for realizing a conductive tether with a large deployment length have not yet been found. In a case in which a metal is used as the conductive material, sufficient mechanical strength cannot be obtained when the metal is made long. It is conceivable that a carbon material such as carbon nanotubes be used as another candidate for the conductive material. However, in a case in which a long material for a tether material (a twisted yarn) is prepared by twisting carbon materials together, the strength of the twisted yarn varies greatly depending on the twist strength and angle. In addition, the twisted yarn has a higher risk of the occurrence of a snarl depending on how the twist is applied, and as the twisted yarn becomes longer, the more likely a snarl is to occur at any position. When the snarl occurs in the material for the tether material, the load strength decreases, and therefore the material for the tether material having such a design is not suitable for the tether. In addition, in a case in which a bundle of the materials for the tether material made of twisted yarns is prepared, a device that performs a twisting step needs to have a straight length that corresponds to a desired length of the tether material. In the case of a tether that requires a length on the order of kilometers, it is not practical to prepare a straight device that can accommodate such a length.

The present invention has been made in consideration of the above circumstances, and an object of the present invention is to provide a ribbon which is conductive, in which decrease in load strength due to occurrence of a snarl is suppressed, and which can be made long, a tether material including the ribbon, a tether including the tether material, and methods for manufacturing a ribbon, a tether material, and a tether. Solution to Problem

The present inventors have found that when a predetermined process is performed using carbon nanotubes which have spinnability derived from a van der Waals force, it is possible to form a high density ribbon in which a plurality of carbon nanotubes are aligned in one direction without the carbon nanotubes being twisted together.

That is, the present invention provides the following means to solve the above problems.

(1) According to one aspect of the present invention, there is provided a ribbon including a plurality of carbon nanotube fibers and extending in a first direction, wherein the plurality of carbon nanotube fibers extend in the first direction.
(2) In the ribbon according to (1) above, an outer periphery may be coated with a coating layer, and the coating layer may be formed of a silicone coating agent or a glass coating agent.
(3) According to one aspect of the present invention, there is provided a tether material formed by twisting a plurality of ribbons together according to (1) or (2) above.
(4) In the tether material according to (3) above, an outer periphery in a radial direction may be coated with a coating layer, and the coating layer may be formed of a silicone coating agent or a glass coating agent.
(5) According to one aspect of the present invention, there is provided a tether formed by weaving a plurality of tether materials according to (3) or (4) above together.
(6) According to one aspect of the present invention, there is provided a method for manufacturing a ribbon, including a passing step of passing a plurality of carbon nanotube fibers drawn from a carbon nanotube forest through a cylindrical member.
(7) According to one aspect of the present invention, there is provided a method for manufacturing a tether material, including: a ribbon forming step of forming ribbons by the method according to (6) above; a twisting step of twisting the ribbons together; and a coating layer forming step of forming a coating layer on an outer periphery of the twisted plurality of ribbons.
(8) According to one aspect of the present invention, there is provided a method for manufacturing a tether, including: a tether material forming step of forming tether materials by the method according to (7) above; and a weaving step of weaving the tether materials together.

### Advantageous Effects of Invention

According to the present invention, it is possible to provide a ribbon which is conductive, in which decrease in load strength due to occurrence of a snarl is suppressed, and which can be made long, a tether material including the ribbon, a tether including the tether material, and methods for manufacturing a ribbon, a tether material, and a tether.

### BRIEF DESCRIPTION OF DRAWINGS

FIG. 1 is a perspective view showing an example of a configuration of a ribbon according to one embodiment of the present invention.
FIG. 2 is a partial cross-sectional perspective view showing an example of a configuration of a tether material according to one embodiment of the present invention.
FIG. 3 is a perspective view showing an example of a configuration of a tether according to one embodiment of the present invention.
FIG. 4 is a perspective view showing an example of a configuration of a debris removal system according to one embodiment of the present invention.
FIG. 5 is a perspective view showing a modification example of the ribbon in FIG. 1.
FIG. 6 is a schematic view illustrating an example of a method for manufacturing a CNT film.
FIG. 7 is a view for illustrating a method for manufacturing a ribbon according to one embodiment of the present invention and showing an aspect of a passing step.
FIG. 8 is an SEM image of a ribbon of Example 1.
FIG. 9 is a graph showing the results of a tensile strength test of the ribbon of Example 1.

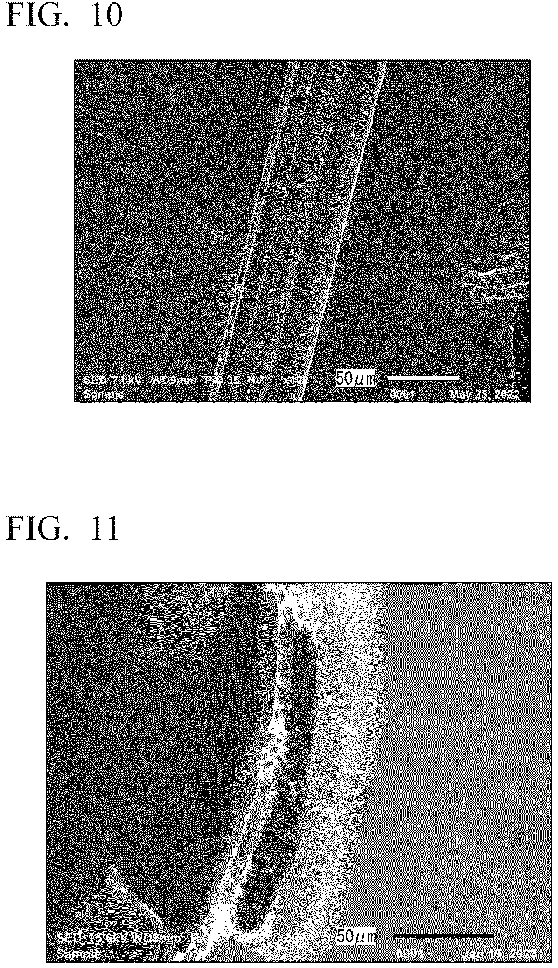

FIG. 10 is an SEM image of a ribbon manufactured in a process of forming a tether material of Example 2.
FIG. 11 is an SEM image of a cross section of the ribbon in FIG. 10.
FIG. 12 is a schematic view of a device used to measure friction coefficients of tether materials of Examples 1 to 3.
FIG. 13 is a graph showing static friction coefficients and kinetic friction coefficients of ribbons of Examples 1 to 3.
FIG. 14 is an SEM image of a cross section of a twisted yarn of Comparative Example 1.

### DESCRIPTION OF EMBODIMENTS

Hereinafter, an example of an embodiment of the present invention will be described in detail with reference to the drawings. In the drawings which will be used in the following description, featured portions may be enlarged for convenience in order to make the features of the present invention easy to understand. For this reason, the dimensional ratios of constituent elements may be different from the actual ones.

### [Ribbon]

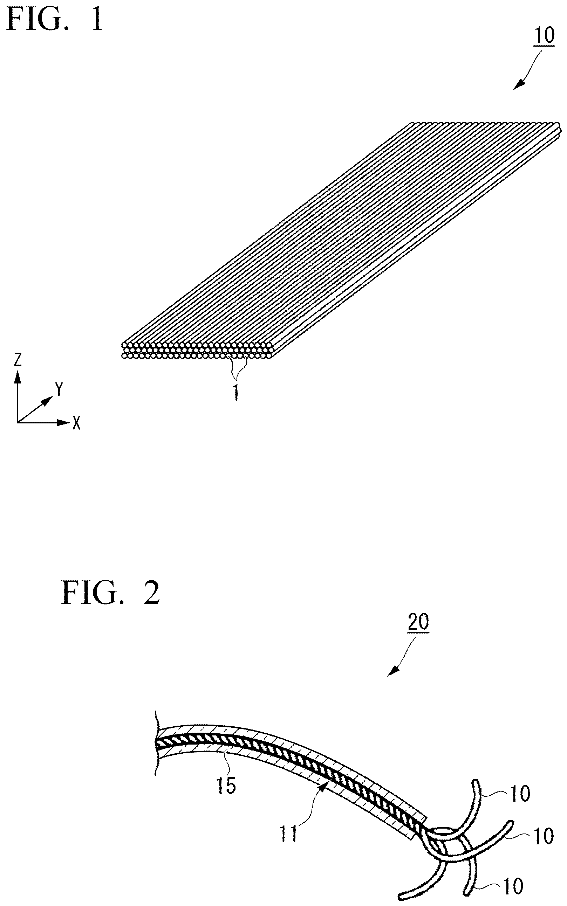

FIG. 1 is a perspective view showing an example of a configuration of a ribbon according to one embodiment of the present invention. The ribbon 10 shown in FIG. 1 is a ribbon 10 that includes a plurality of carbon nanotube fibers 1 and extends in a first direction, and the plurality of carbon nanotube fibers 1 extend in the first direction. That is, an extension direction of the ribbon 10 and an extension direction of each of the plurality of carbon nanotube fibers 1 constituting the ribbon 10 are the same.

In FIG. 1, an extension direction is a y direction, a thickness direction of the ribbon is a z direction, and a direction perpendicular to the y direction and the z direction is an x direction. That is, in the example shown in FIG. 1, the first direction corresponds to the y direction.

The carbon nanotube fiber 1 is a fibrous material made of carbon nanotubes.

The carbon nanotube is a material that exhibits a strong van der Waals force, and a plurality of carbon nanotube fibers 1 that make up the ribbon are bonded to each other due to the van der Waals force. This strong van der Waals force makes it possible to realize the ribbon 10 made of the carbon nanotubes without using an adhesive or the like.

In the ribbon 10, the plurality of carbon nanotube fibers 1 are formed substantially parallel to each other. Due to this structure, when the ribbon 10 is observed with an electron microscope, stripes of the carbon nanotube fibers 1 extending approximately parallel to the extension direction of the ribbon 10 can be confirmed. An extension direction of the carbon nanotube fiber being approximately parallel to an axial direction of the ribbon 10 means that in an electron microscope image observed in a direction perpendicular to a surface of the ribbon 10, an angle between an extension direction of a line constituting an outline of the ribbon 10 and an extension direction of each of the stripes of the carbon nanotube fibers 1 is 10° or less, and the angle is preferably 5° or less.

In the ribbon 10, the plurality of carbon nanotube fibers 1 are stacked, for example, in layers. That is, in the ribbon 10, the plurality of carbon nanotube fibers 1 are formed, for example, in a plurality of layers. The ribbon 10 is, for example, a linear material that is flat in a cross-sectional view. In a cross section of the ribbon 10, an aspect ratio of a length in a lateral direction (the z direction in FIG. 1) to a length in a longitudinal direction (the x direction in FIG. 1) can be adjusted by a shape of a hole formed in a cylindrical member used during manufacture and is, for example, 1:5 to 1:1000. When an aspect ratio of the length in the longitudinal direction to the length in the lateral direction is sufficiently high, it is possible to suppress the occurrence of distortion in the carbon nanotube fibers constituting a unidirectionally oriented web used during manufacturing. In addition, when the aspect ratio is low, the carbon nanotube fibers overlap each other in a plurality of layers, and the density of the carbon nanotube fibers can be sufficiently increased in a thickness direction. Therefore, when the aspect ratio of the cross section of the ribbon is in the above range, it is easier to further increase the mechanical strength.

The ribbon according to the present embodiment is capable of suppressing occurrence of a snarl, and thus a material for a tether material on the order of kilometers, for example, of 1 kilometer or more in length such as several tens of kilometers in length, can be realized in a single piece without being connected to other members. In addition, the ribbon according to the present embodiment can be made to have uniform quality even when the ribbon is long. Therefore, according to the present embodiment, it is possible to provide a ribbon for a tether which is conductive, in which decrease in load strength due to occurrence of the snarl is suppressed, and which can be made long.

### [Tether material]

FIG. 2 is a partial cross-sectional perspective view showing an example of a configuration of a tether material according to one embodiment of the present invention. A tether material 20 shown in FIG. 2 is formed by twisting a plurality of ribbons 10 together. The tether material 20 may be S-twisted (right-twisted) or Z-twisted (left-twisted).

The tether material 20 shown in FIG. 2 has a twisted yarn 11 formed by twisting the plurality of ribbons 10 together, and the radial outer periphery of the twisted yarn 11 is coated with a coating layer 15. That is, the tether material 20 includes the twisted yarn 11 and the coating layer 15. The tether material 20 preferably includes the coating layer 15 as shown in FIG. 2.

The coating layer 15 is formed of a silicone coating agent or a glass coating agent and is preferably formed of the silicone coating agent from the viewpoint of improving flexibility and strength. Examples of the glass coating agent include a water-repellent glass coating agent and a hydrophilic glass coating agent. The use of the water-repellent glass coating agent as the glass coating agent is one of preferable aspects. When the coating layer 15 formed of such a material is provided, friction coefficients, such as a static friction coefficient and a kinetic coefficient, of the tether material 20 can be reduced. That is, the stickiness of the tether material 20 caused by the strong van der Waals forces of the carbon nanotube fibers 1 can be suppressed, and it is possible to obtain a tether having a smooth surface. When the stickiness of the tether material 20 is suppressed, it is possible to prevent a plurality of tether materials 20 from adhering to each other and, as a result, to prevent the ribbons 10 in the tether material 20 from breaking, and it is possible to weave the plurality of tether materials 20 together to manufacture a mesh-like tether. In particular, the silicone coating has been confirmed to have excellent flexibility and strength, and taking into account the friction characteristics found in this case as described above, it is considered that the silicone coating agent is particularly excellent for a tether application. For this reason, the coating layer 15 is preferably formed of the silicone coating agent (a silicone resin).

### [Tether]

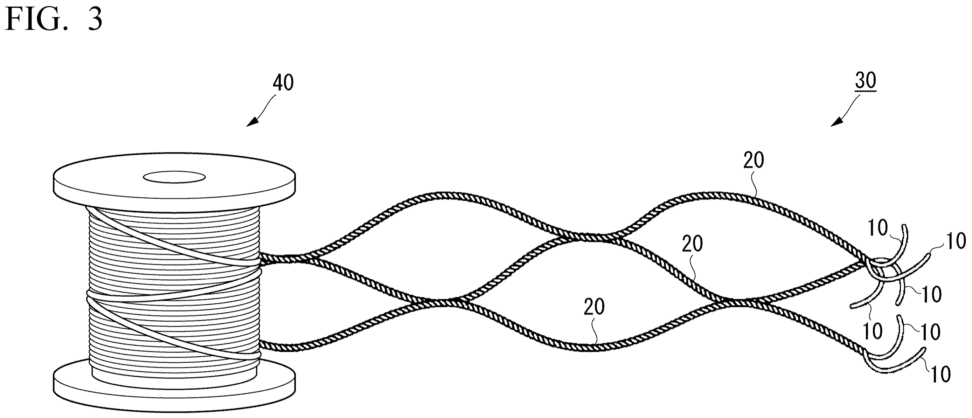

FIG. 3 is a perspective view showing an example of a configuration of a tether according to one embodiment of the present invention. The tether 30 shown in FIG. 3 is formed by weaving the plurality of tether materials 20 together. The tether 30 is formed to have a mesh-like structure, such as a knotless mesh. The tether 30 is formed, for example, in a mesh shape by tying the plurality of tether materials 20 at predetermined intervals or at random intervals.

The tether 30 is wound around a bobbin 40, for example, and mounted on an artificial satellite. FIG. 3 shows, as an example, an aspect in which the tether 30 is wound around the bobbin 40. It is possible to unwound the tether 30 wound around the bobbin 40. In the present embodiment, a device for accommodating the tether 30, such as the bobbin 40, is also referred to as a tether accommodating device.

The tether 30 shown in FIG. 3 is formed in a mesh shape by tying or weaving three tether materials 20 to each adjacent tether material 20 thereof at predetermined intervals or random intervals. The tether according to the present embodiment is not limited to this example and may be formed into a mesh shape by tying or weaving four or more tether materials 20 at predetermined intervals or random intervals.

### [Debris removal system]

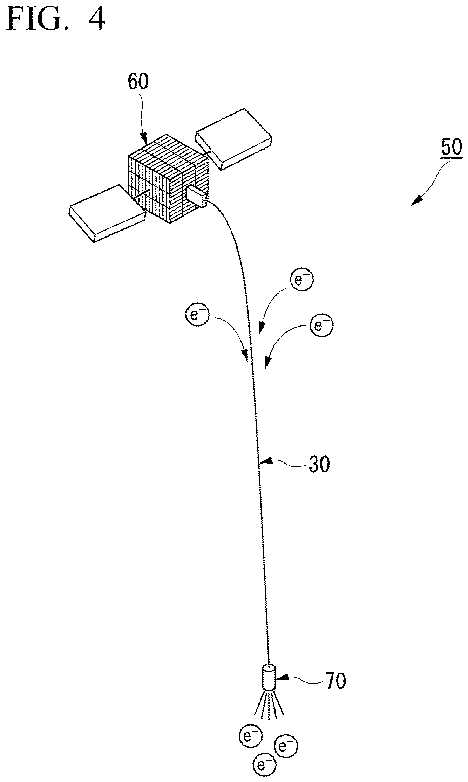

FIG. 4 is a perspective view showing an example of a configuration of a debris removal system according to one embodiment of the present invention. A debris removal system 50 shown in FIG. 4 includes an artificial satellite 60 on which a tether accommodating device is mounted, a tether 30 connected to the tether accommodating device of the artificial satellite 60, and a slave unit 70 provided to be connected to one end of the tether 30.

The debris removal system 50 is configured to allow a current to flow through the tether 30 positioned between the artificial satellite 60 and the slave unit 70.

The tether 30 connects the artificial satellite 60 and the slave unit 70 to each other and is mounted by being wound around a bobbin or the like such that it is extendable to adjust a distance between the satellite 60 and the slave unit 70. In the debris removal system 50 of the present embodiment, as described above, since the stickiness of the tether material 20 is suppressed, the tether can be expanded smoothly and the ribbons 10 in the tether material 20 or the carbon nanotube fibers 1 in the ribbon 10 are prevented from breaking.

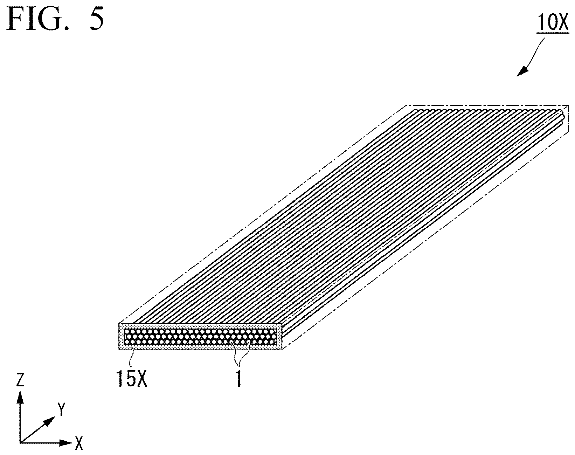

FIG. 5 is a perspective view showing a modification example of the ribbon in FIG. 1. In a ribbon 10X shown in FIG. 5, the outer periphery of a plurality of carbon nanotube fibers 1 is coated with a coating layer 15X. In FIG. 5, a part of the coating layer 15X is shown in a see-through manner, and an outline thereof is indicated by a two-dot chain line. The coating layer 15X is formed to surround the plurality of carbon nanotube fibers 1 in a cross-sectional view of the ribbon 10X and extends in an extension direction of each of the plurality of carbon nanotube fibers 1.

The coating layer 15X is formed of a silicone coating agent or a glass coating agent and is preferably formed of the silicone coating agent from the viewpoint of improving flexibility and strength. Examples of the glass coating agent include a water-repellent glass coating agent and a hydrophilic glass coating agent. The use of the water-repellent glass coating agent as the glass coating agent is one of preferable aspects. When the coating layer 15X is formed on the outer periphery of the ribbon 10X, a friction coefficient of the ribbon 10X can be reduced. That is, the stickiness of the ribbons 10X can be suppressed, and thus it can be prevented that when the ribbons 10X are twisted together to form a tether material, the ribbons are excessively attracted to each other due to a strong van der Waals force of the carbon nanotubes. Therefore, the tether material can be formed efficiently, and it can be further prevented that an excessive force is applied to each of the plurality of carbon nanotube fibers 1 to break itself.

The tether material according to one embodiment of the present invention may be formed by twisting a plurality of ribbons 10X together as shown in FIG. 5 or may be formed by twisting a plurality of ribbons 10X and ribbons 10 together. In addition, the tether according to one embodiment of the present invention may be formed by weaving a plurality of tether materials each obtained by twisting the ribbons 10X, or the ribbons 10X and the ribbons 10 together, or may be formed by weaving at least one tether material obtained by twisting the ribbons 10X, or the ribbons 10X and the ribbons 10, with at least one tether material 20 together.

### [Method for manufacturing ribbon]

Next, a method for manufacturing the ribbon according to the above embodiment will be described. The method for manufacturing a ribbon according to the present embodiment includes a passing step of passing a plurality of carbon nanotube fibers drawn from a carbon nanotube forest through a cylindrical member.

First, a plurality of carbon nanotube fibers drawn from a carbon nanotube forest are prepared. As the plurality of carbon nanotube fibers drawn from the carbon nanotube forest, for example, a carbon nanotube film (a CNT film) can be used.

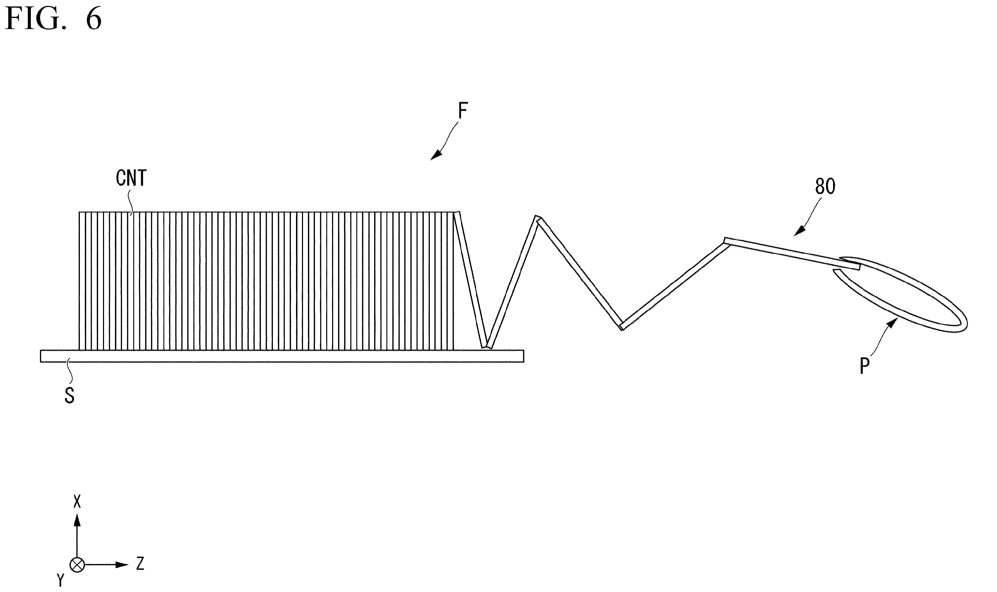

The CNT film is formed by, for example, the following procedure. FIG. 6 is a schematic view illustrating an example of a method for manufacturing the CNT film. In FIG. 6, the scale of each member is adjusted for convenience of explanation such that the gist of the invention can be easily understood. The CNT film is also referred to as a web (a CNT web).

First, a plurality of carbon nanotubes oriented to be perpendicular to a substrate S are grown by a chemical vapor deposition method. The formation of the plurality of carbon nanotubes oriented to be perpendicular to the substrate S may be carried out, for example, after a metal catalyst is formed on the substrate S in advance by sputtering or the like. The plurality of carbon nanotubes oriented to be perpendicular to the substrate S are densely formed on the substrate S. Such a plurality of carbon nanotubes oriented to be perpendicular to the substrate S are referred to as a carbon nanotube forest (a CNT forest) and are indicated by a reference sign F in FIG. 6.

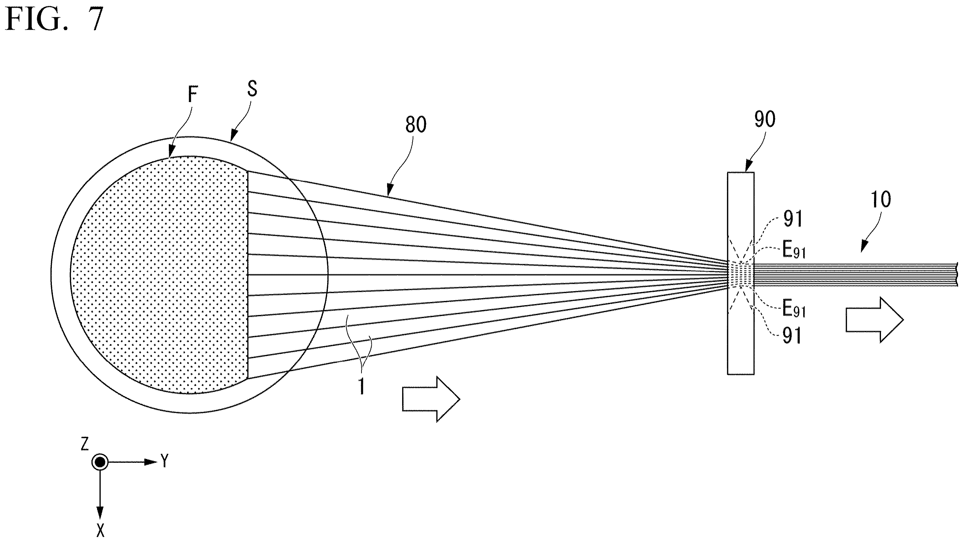

Next, from among the perpendicularly oriented carbon nanotubes that make up the CNT forest F, a carbon nanotube positioned at an end is drawn. FIG. 6 shows an aspect in which the perpendicularly oriented carbon nanotube is drawn using a drawing member P. FIG. 7 is a view for illustrating a method for manufacturing a ribbon according to one embodiment of the present invention and showing an aspect of a passing step.

The drawing member P is a member that draws the carbon nanotube (CNT) from the CNT forest. In a case in which each of tip ends of the drawing member P has a flat shape, a width of an end portion of a CNT film portion corresponds to a width between end portions of the drawing member P. As the drawing member P, a pair of tweezers, a drum, or the like can be used. When the carbon nanotube positioned at the end of the CNT forest F is drawn by the drawing member P, the carbon nanotubes adjacent to the drawn carbon nanotube are drawn in sequence due to the van der Waals force, and a plurality of carbon nanotube fibers extending in a direction, in which the carbon nanotube positioned at the end is drawn, are collected to form a CNT film 80. The CNT film 80 has a configuration in which, for example, the plurality of carbon nanotube fibers 1 in each of which the end portions of the CNTs are connected to each other, are arranged in the width direction. Here, the CNT film 80 is not limited to a configuration in which the width is constant and may be a configuration in which the width changes continuously in the longitudinal direction. In the present embodiment, for example, as shown in FIGS. 6 and 7, the drawing member P having a width smaller than the width of the CNT forest F is used to form the CNT film 80 whose width narrows from a side of the CNT forest F toward a tip end portion. The CNT film 80 is formed such that the width (a length in the x direction) thereof is greater than the thickness (a length in the z direction) thereof. Among the CNT films 80, a film in which a plurality of carbon nanotube fibers 1 constituting the CNT film 80 are arranged in parallel is referred to as a unidirectionally oriented film.

### (Passing step)

In the passing step, the plurality of carbon nanotube fibers drawn from the CNT forest F are passed through a member having a cylindrical shape (hereinafter referred to as a cylindrical member) 90. The passing step may be carried out continuously in parallel with the step of drawing the plurality of CNT fibers from the CNT forest F or may be carried out intermittently with intervals between each. In addition, when the plurality of carbon nanotube fibers 1 drawn from the CNT forest F are passed through the cylindrical member 90 and then a region that has passed through the cylindrical member 90 is simply drawn, it is possible to continuously form the ribbon 10.

The cylindrical member 90 has, for example, a reduced diameter portion 91 therein. When the plurality of carbon nanotube fibers 1 through a region surrounded by a tip end portion E₉₁ of the reduced diameter portion 91, the ribbon 10 in which the plurality of carbon nanotube fibers extend in the extension direction is formed. The tip end portion E₉₁ of the reduced diameter portion 91 does not have to be pointed as shown, but may be flat. The reduced diameter portion 91 is a portion whose inner diameter is smaller than other portions of the cylindrical member 90. In addition, the inner diameter of the cylindrical member 90 may be constant, and in this case, the entire inner circumference in an axial direction can be said to be the tip end portion E₉₁.

The width of the ribbon 10 obtained by the passing step corresponds to the inner diameter of the reduced diameter portion 91 of the cylindrical member 90. The cylindrical member 90 has, for example, a through hole that is defined by the reduced diameter portion 91 in a plan view. The shape of the through hole is, for example, circular, or may be a flat shape such as an ellipse.

The plurality of carbon nanotube fibers 1, becomes smaller a distances from each other and attract each other with stronger van der Waals force by passing through the cylindrical member. Accordingly, the adjacent carbon nanotube fibers 1 are bonded to each other, and thus it is possible to form the ribbon 10, which is a material for the tether material, without twisting the carbon nanotube fibers 1 together.

### [Method for manufacturing tether material]

A method for manufacturing a tether material according to the present embodiment includes a ribbon forming step of forming a plurality of ribbons by the method for manufacturing a ribbon according to the above embodiment and a twisting step of twisting a plurality of ribbons to form a tether material together.

### (Twisting step)

In the twisting step, for example, 2 to 100 ribbons are twisted together to form a tether material. The twisting may be S-twisted or Z-twisted.

### (Coating layer forming step)

In addition, the method for manufacturing a tether material preferably further includes a coating layer forming step of forming a coating layer on an outer periphery of the twisted plurality of ribbons.

As the coating layer, a silicone coating agent or a glass coating agent can be used. The coating layer can be formed, for example, by applying and drying the coating agent.

### [Method for manufacturing tether]

A method for manufacturing a tether according to the present embodiment includes a tether material forming step of forming a plurality of tether material by the method for manufacturing a tether material according to the above embodiment and a weaving step of weaving the plurality of the tether materials together.

According to the above embodiment, since the carbon nanotube fibers are provided and each of the plurality of carbon nanotube fibers extends in the extension direction of the ribbon, it is possible to provide a ribbon which is conductive and in which decrease in load strength due to occurrence of a snarl is suppressed, a tether material including the ribbon, a tether including the tether material, and methods for manufacturing a ribbon, a tether material, and a tether. In addition, since the carbon nanotube fiber has a high specific strength, and the carbon nanotube fibers are bonded to each other due to the strong van der Waals force by using the cylindrical member, it is possible to realize a ribbon that is made thin and has high strength compared to the weight and volume thereof. As described above, in the ribbon of the present embodiment, since the extension direction of the ribbon is the same as the extension direction of the carbon nanotube fibers and there is no need to twist the carbon nanotube fibers together, the ribbon is suitable as a material for a tether material, which needs to be long in the range of several kilometers to several tens of kilometers, of a tether for a space debris removal system, or the like.

In addition, when the outer periphery of one or both of the ribbon and the tether material is coated with the coating layer formed of the silicone coating agent or the glass coating agent, it is possible to achieve smooth surface characteristics in which the stickiness caused by the strong van der Waals force of the carbon nanotubes is suppressed. Therefore, when the weaving step is performed to form the tether, it is possible to obtain the effect of preventing the carbon nanotube fibers from breaking, the effect of preventing the tether wound around the bobbin from becoming unable to expand, and the effect of preventing decrease in the strength of the tether.

In the above, although the embodiment of the present invention has been described, this embodiment is presented as an example and is not intended to limit the scope of the invention. This embodiment can be implemented in various other forms, and various omissions, replacements, and changes can be made without departing from the gist of the invention. These embodiments and modifications thereof are included in the scope and gist of the invention, as well as in the scope of the invention described in the claims and the equivalent scope thereof.

In the above embodiment, the member having a cylindrical shape, that is, the cylindrical member 90 is a name made by focusing on the shape in a plan view, and the axial length thereof is not particularly limited. That is, in the present embodiment, the cylindrical member includes a member, such as the cylindrical member 90 shown in FIG. 7, which has a short axial length and is also referred to as an annular member.

The upper limit values and/or lower limit values of the numerical ranges described in this specification can be combined in any manner to define a preferred range. For example, the upper limit values and lower limit values of the numerical ranges can be combined in any manner to define a preferred range, the upper limit values of the numerical ranges can be combined in any manner to define a preferred range, and the lower limit values of the numerical ranges can be combined in any manner to define a preferred range.

Throughout the present disclosure, the singular expressions should be understood to include the plural concept, unless otherwise specified. Therefore, singular articles (for example, in the English language, "a," "an," "the," or the like) should be understood to include the plural concept, unless otherwise specified.

### [Examples]

Hereinafter, examples of the present invention will be described. The present invention is not limited to the following examples.

### [Example 1]

First, a unidirectionally oriented film was prepared as a CNT film. Specifically, first, a silicon substrate, which had a thickness of 2 to 50 nm and to which a catalyst for growing carbon nanotubes was added, was prepared. Next, perpendicularly oriented carbon nanotubes were grown from the catalyst by a chemical vapor deposition method to prepare a perpendicularly oriented carbon nanotube forest that was oriented to be perpendicular to the substrate.

Next, from the perpendicularly oriented carbon nanotube forest formed on the substrate, a carbon nanotube fiber positioned at an end portion in one direction was picked up and drawn such that a plurality of carbon nanotube fibers were arranged in parallel. In this manner, a unidirectionally oriented film was manufactured in which the plurality of carbon nanotube fibers having a diameter of 7 to 10 nm were arranged in parallel.

In addition, in parallel with the formation of the unidirectionally oriented film, the plurality of carbon nanotube fibers drawn from the carbon nanotube forest were passed through a cylindrical member to manufacture a ribbon of Example 1. A ribbon with a width of approximately 260 µm and a thickness of approximately 10 µm was manufactured using a cylindrical member having a through hole in a circular shape in a cross-sectional view with a diameter of 260 µm.

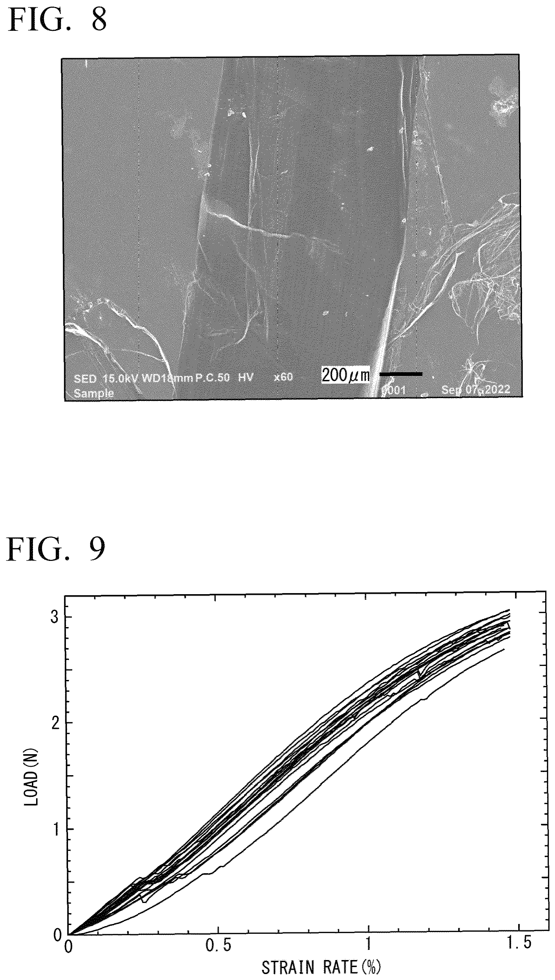

The ribbon manufactured in Example 1 was observed with a scanning electron microscope (SEM). FIG. 8 is an SEM image of the ribbon of Example 1. The SEM image shown in FIG. 8 was obtained by observing the ribbon in a direction perpendicular to the width direction of the ribbon. In the SEM image shown in FIG. 8, stripes could be confirmed in an extension direction of the plurality of carbon nanotube fibers that made up the ribbon. From the SEM image, it could be confirmed that the extension direction of each of the stripes formed by the plurality of carbon nanotube fibers in the ribbon was at an angle of 10° or less with respect to an extension direction of a line constituting an outline of the ribbon. That is, the extension direction of the outline of the ribbon and the extension direction of each of the stripes of the plurality of carbon nanotube fibers provided in the ribbon were approximately parallel to each other.

Eighteen samples were manufactured under the same conditions, and the tensile strength of the ribbon of Example 1 was measured. The tensile strength was measured using a table-top tensile testing machine (TOKAI TESTING MACHINE MFG.CO.,LTD., TMT-1003) according to a method based on ISO 11566: 1996.

FIG. 9 is a graph showing the strength of the ribbon of Example 1. FIG. 9 shows the measurement results for all seventeen samples manufactured. In FIG. 9, the horizontal axis represents a strain rate, and the vertical axis represents a load. On the horizontal axis in FIG. 9, for example, 1% indicates that the length is 1% greater than the original length. The tensile strength was measured until the sample was broken. As shown in FIG. 9, all of the ribbons of Example 1 exhibit a maximum tensile load of 2.5 N or more. This value is sufficiently high to be expected for use as a tether material with regard to strength.

### [Example 2]

A ribbon was manufactured under the same conditions as in Example 1, and then a silicone coating agent was applied to the outer periphery of this ribbon and dried to form a coating layer.

### [Example 3]

A ribbon having a coating layer formed on the outer periphery thereof was manufactured under the same conditions as in Example 2, except that a water-repellent glass coating agent (HL-9, manufactured by HardoLass Holdings Co., Ltd.) was used instead of the silicone coating agent when forming the coating layer.

### [Example 4]

A ribbon having a coating layer formed on the outer periphery thereof was manufactured under the same conditions as in Example 3, except that a hydrophilic glass coating agent (HL-A, manufactured by HardoLass Holdings Co., Ltd.) was used instead of the water-repellent coating agent when forming the coating layer.

### [Comparative Example 1]

A twisted yarn was manufactured using a plurality of carbon nanotube fibers drawn from a carbon nanotube forest in the same manner as in Example 1.

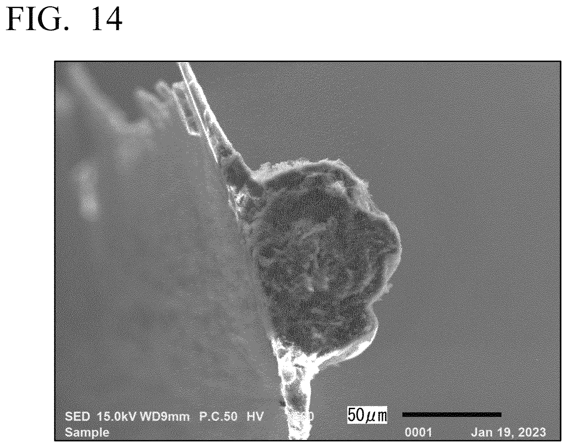

The cross section of the twisted yarn manufactured in Comparative Example 1 was observed with a scanning electron microscope (SEM). The SEM image is shown in FIG. 14.

### [Friction coefficient measurement test]

The ribbons of Examples 1 to 3 were subjected to a friction coefficient measurement test. Specifically, a device obtained by modifying a tensile testing machine (MCT-2150W, manufactured by A&D Co., Ltd.) based on JIS K 7125 to be suitable for measuring the friction coefficient was used.

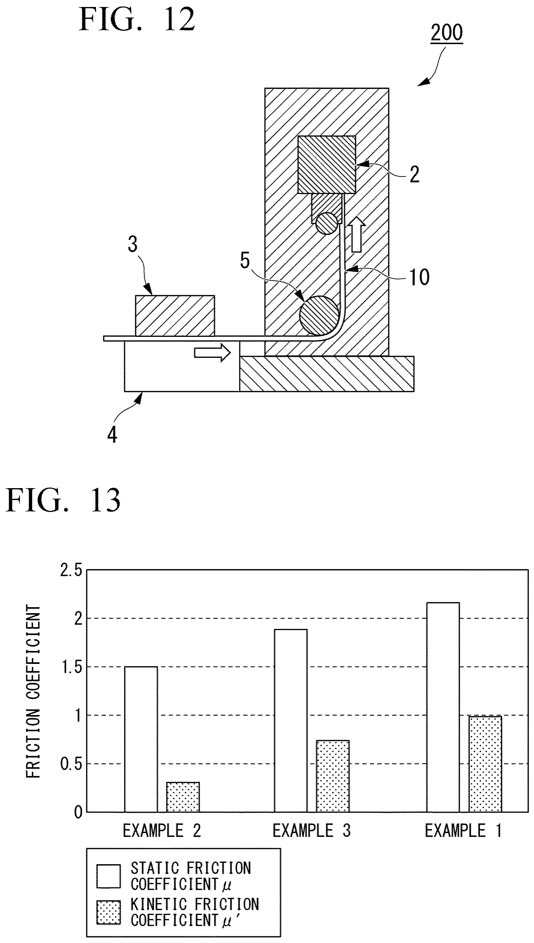

FIG. 12 is a schematic view of a device used to measure friction coefficients of the ribbons of Examples 1 to 3. FIG. 12 shows an example in which the ribbon of Example 1 is used. The device 200 shown in FIG. 12 includes a load cell 2, a weight 3, a sample stage 4, and a pulley 5. The ribbon 10 (the ribbon 10X in the case of Examples 2 and 3) is connected to the load cell of this device 200. The ribbon 10 is disposed to pass through the pulley 5 and to be sandwiched between the weight 3 and the sample stage 4. The device 200 is designed such that the tension transmitted from the tensile testing machine to the ribbon 10 is horizontal with the pulley 5 provided in a predetermined position. Here, a Teflon sheet ("Teflon" is a registered trademark) having excellent sliding properties is attached to the surfaces of the weight 3 and the sample stage 4 facing the ribbon 10. In FIG. 12, a direction of a force transmitted to the ribbon 10 by the load cell 2 is indicated by an arrow.

Using the device 200, the ribbon 10 was pulled by the load cell 2, the tensile load by the load cell 2 was changed, a frictional force between the Teflon sheet ("Teflon" is a registered trademark) attached to the weight 3 and the ribbon 10 was measured. The tensile load applied by the load cell 2 was increased, and a maximum static frictional force F₁ corresponding to the tensile load when the ribbon 10 first moved was measured, and a kinetic frictional force F₂ was measured from the average of the frictional forces from when the ribbon 10 first moved until the ribbon 10 moved 3 mm. From F₁ = µN and F₂ = µ'N, a static friction coefficient µ corresponding to the maximum static frictional force F₁ and a kinetic friction coefficient µ' corresponding to the kinetic frictional force F₂ were calculated. In the expression, N represents a normal force acting on the ribbon 10.

FIG. 13 is a graph showing the static friction coefficients and the kinetic friction coefficients of the ribbons of Examples 1 to 3. As shown in FIG. 13, each of the ribbons of Examples 2 and 3 exhibited superior static friction coefficient µ and dynamic friction coefficient µ' compared to the ribbon of Example 1 not having a coating layer. Therefore, it could be confirmed that when a coating layer formed of a silicone coating agent or a glass coating agent was formed on the outer periphery, the stickiness of the ribbon could be reduced. In addition, it can be considered that the same frictional characteristics as those described above can be obtained even in a case in which a coating layer is formed on a tether material, as in a case in which a coating layer is formed on a ribbon.

### REFERENCE SIGNS LIST

1 Carbon nanotube fiber (CNT fiber)
10, 10X Ribbon
11 Twisted yarn
15, 15X Coating layer
20 Tether material
30 Tether
40 Bobbin
50 Debris removal system
60 Artificial satellite (master unit)
70 Slave unit
80 CNT film
90 Cylindrical member
91 Reduced diameter portion
200 Device

## Claims

1. A ribbon comprising a plurality of carbon nanotube fibers and extending in a first direction,
wherein the plurality of carbon nanotube fibers extend in the first direction.

2. The ribbon according to claim 1,
wherein an outer periphery is coated with a coating layer, and
wherein the coating layer is formed of a silicone coating agent or a glass coating agent.

3. A tether material formed by twisting a plurality of ribbons according to claim 1 together.

4. The tether material according to claim 3,
wherein an outer periphery in a radial direction is coated with a coating layer, and
wherein the coating layer is formed of a silicone coating agent or a glass coating agent.

5. A tether formed by weaving a plurality of tether materials according to claim 3 together.

6. A method for manufacturing a ribbon, comprising a passing step of passing a plurality of carbon nanotube fibers drawn from a carbon nanotube forest through a cylindrical member.

7. A method for manufacturing a tether material, comprising:
a ribbon forming step of forming a ribbons by the method according to claim 6; and
a twisting step of twisting the ribbons together to form a tether material.

8. The method for manufacturing a tether material according to claim 7, further comprising a coating layer forming step of forming a coating layer on an outer periphery of the twisted plurality of ribbons.

9. A method for manufacturing a tether, comprising:
a tether material forming step of forming a tether materials by the method according to claim 7; and
a weaving step of weaving the tether materials together.
